# EUROPEAN PATENT SPECIFICATION

(11) **EP 2 443 803 B1**
(45) Date of publication and mention of the grant of the patent: **27.03.2013**
(21) Application number: 09779750.0
(22) Date of filing: 15.06.2009
(51) Int. Cl.: H04L 29/06, H04L 29/12, H04W 12/06

(54) **GATEWAY CERTIFICATE CREATION AND VALIDATION**
ERZEUGUNG UND VALIDIERUNG VON GATEWAY-ZERTIFIKATEN
CRÉATION ET VALIDATION DE CERTIFICAT DE PASSERELLE

(43) Date of publication of application: 25.04.2012
(73) Proprietor: Nokia Siemens Networks OY, 02610 Espoo (FI)
(72) Inventor: KORHONEN, Jouni, 11100 Riihimäki (FI)
(86) International application number: PCT/EP2009/057364
(87) International publication number: WO 2010/145686

(56) References cited:
- WO-A-2007/074286
- US-A1- 2008 137 859
- ARENDS TELEMATICA INSTITUUT R AUSTEIN ISC M LARSON VERISIGN D MASSEY COLORADO STATE UNIVERSITY S ROSE NIST R: "Protocol Modifications for the DNS Security Extensions; rfc4035.txt" IETF STANDARD, INTERNET ENGINEERING TASK FORCE, IETF, CH, 1 March 2005 (2005-03-01), XP015041964 ISSN: 0000-0003

## Description

The present invention relates to gateway certificate creation and validation in a communications network system. The present invention is applicable at least to IETF (Internet Engineering Task Force) IP (Internet Protocol) mobility security and 3GPP (third Generation Partnership Project) Evolved Packet Core.

The issue of gateway certificates is becoming more topical as the requirement of local breakout gains interest on deployments. The more there are home agents and other gateways to contact from various organizations, the more problematic the distribution of server side certificates becomes. This is especially the case from a mobile node point of view which has to validate unknown certificates from a random organization probably belonging to some roaming consortia the mobile node also belongs to.

For example, the 3GPP Evolved Packet core uses (DS) MIPv6 ((Dual Stack) Mobile IPv6 (IP version 6)) and (MOB) IKEv2 ((Mobility) extensions to IKEv2 (Internet Key Exchange protocol version 2)) based protocols which both use IKEv2 negotiation to authenticate and bootstrap the mobile node for IP access. During the IKEv2 negotiation, the mobile node also verifies a gateway based on a gateway provided server side certificate. If the number of gateways is large and the gateways belong to an arbitrary number of organizations, it becomes problematic to distribute all possible certificates to the mobile node that are required to authenticate a random gateway. Also distributing certificates that work everywhere or have extremely long lifetime are not desirable from security point of view.

The US 2008/137859 A1 provides an approach to public key passing to inhibit man-in-the-middle attacks during an exchange of public keys over one or more public networks.

The WO 2007/074286 A discloses a domain server which comprises means for receiving a request transmitted from a client device for obtaining DNS data, a zone file comprising at least one partition rule defining the domain partition into sub-zones, wherein DNS data items of said sub-zones are associated with a pair of partition keys allocated to said sub-zone, means for obtaining from said zone file a useful piece of information sufficient for identifying the pair of partition keys associated with a searched DNS data and means for transmitting the searched DNS data to the client device, the signature value of said data being produced by means of a private component of the pair of partition keys and a useful piece of information.

The present invention aims at providing an improved mechanism to assist the authentication of a gateway using server side certificates.

This is achieved by the subject matter as defined in the appended claims.

According to an embodiment of the invention, a gateway obtains a server side certificate which is signed with a key used for signing zone data for a DNS (Domain Name System) discovery procedure of discovering the gateway by a mobile node and transmits the signed server side certificate to the mobile node in an authentication procedure of authenticating the gateway. The signed certificate may be a self-signed certificate. The mobile node verifies the server side certificate received in the authentication procedure of authenticating the gateway, using a public key used for verifying a given zone in the DNS discovery procedure of discovering the gateway based on the signed zone data received for the gateway.

According to an embodiment of the invention, easier creation and distribution of MIPv6 home agent certificates, (MOB) IKEv2 gateway certificates and web server certificates e.g. when using HTTPS (Hypertext Transfer Protocol Secure is enabled.

In the following embodiments of the invention are described with reference to the accompanying drawings which are part of the specification, in which:
Fig. 1 shows a schematic block diagram illustrating a gateway and a mobile node according to an embodiment of the invention; and
Fig. 2 shows a signaling diagram illustrating a certificate creation and validation method according to an embodiment of the invention.

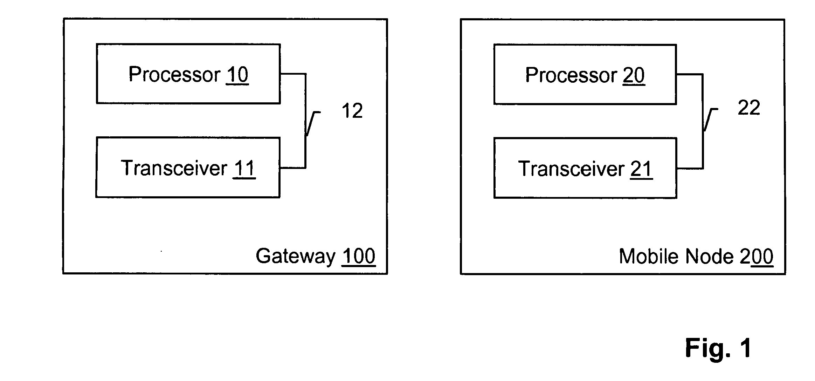

As shown in Fig. 1, according to an embodiment of the invention a gateway 100 comprises a processor 10 and a transceiver 11 which are connected by a bus 12. The gateway 100 may comprise an apparatus of a 3GPP Evolved Packet core such as a MIPv6 home agent or (MOB)IKEv2 gateway.

Moreover, as shown in Fig. 1, according to an embodiment of the invention a mobile node 200 comprises a processor 20 and a transceiver 21 which are connected by a bus 22. The mobile node 200 may be configured to communicate with an apparatus of a 3GPP Evolved Packet core such as a MIPv6 home agent, (MOB)IKEv2 gateway, or a HTTPS enabled web server.

An embodiment of the present invention exploits DNSSEC (Domain Name System Security Extensions) infrastructure. DNSSEC adds security to DNS. The mobile node 200 may discover the gateway 100 using a DNS-based discovery mechanism. If DNSSEC is deployed and the mobile node 200 is capable and required to use DNSSEC to verify DNS responses during the DNS-based gateway discovery, the public key distribution and delegation signer properties of the DNSSEC can also be used to create, sign and verify a server side certificate of the gateway 100.

According to an embodiment of the invention, a server side certificate is signed by the same keys that are used to sign DNS zone data, e.g. a Zone Signing Key (ZSK). This signed DNS zone data is in the same place where DNS information related to gateways is stored for the DNS-based discovery procedures. Therefore, if the mobile node 200 trusts a DNS response it gets and is able to verify its correctness, then the mobile node 200 is also able to trust and verify the server side certificate that was signed by the same keys as the zone data.

According to an embodiment of the invention, the processor 10 obtains a server side certificate which is signed with a key, e.g. a Zone Signing Key (ZSK), used for signing zone data for a discovery procedure of discovering the gateway 100 by the mobile node 200, and the transceiver 11 transmits the signed server side certificate to the mobile node 200 in an authentication procedure of authenticating the gateway 100. The signed certificate may be self-signed. A self-signed certificate is an identity certificate that is signed by its own creator. The processor 10 may generate the server side certificate or obtain it from a certificate authority. Keys KSK (Key Signing Key) and/or ZSK (Zone Signing Key) of DNSSEC may be used for signing the zone data and the created server side certificate. It is envisioned that using a ZSK for (self)signing the created certificates is more appropriate than using a KSK. That kind of arrangement allows more frequent and easier certificate lifetime management.

The server side certificate may be received by the transceiver 21 of the mobile node 200 in an authentication procedure of authenticating the gateway 100. The processor 20 verifies the received server side certificate using a key used for verifying a given zone in the discovery procedure of discovering the gateway 100 based on signed zone data received for the gateway 100. The key may be a public key and the signed zone data may have been signed by keys KSK and/or ZSK of DNSSEC, where using ZSK may be more appropriate as mentioned above.

With this approach an operator is able to roll out new gateway server side certificates practically on the fly with short lifetimes. A requirement is that DNSSEC is also in place and used by the mobile node and the mobile node has required public keys/certificates to verify the DNSSEC secured DNS responses.

Besides it is noted that in 3GPP environment mobile nodes may be authenticated towards the network using EAP-SIM (Extensible Authentication Protocol-Subscriber Identity Module)/AKA (Authentication and Key Agreement)/AKA'.

According to an embodiment of the invention, there are the following architectural requirements:
- DNSSEC is deployed and used; in case the mobile node skips DNSSEC and server side certificate validation, there is no security in place.
- DNSSEC related resource records RRSIG (Resource Record Signature), DNSKEY, NSEC and DS (Delegation Signature) are used. When a zone is DNSSEC signed, a number of DNS records are added to the zone. First a DNSKEY-record is added for each private/public key set used to sign the zone. DNSKEY-records hold the public keys that clients can use to verify signatures.

Next, an NSEC-record is added for each unique record name in the zone. Each NSEC record lists all the record types that exist for the name that it represents, and points to the next record name in the zone forming a chain between all existing names in the zone. These (signed) NSEC records are returned in responses to DNSSEC enabled queries for non-existing names/types, so that clients can verify the non-existence. Finally, all the DNS records in the zone (including the DNSKEY and NSEC records) are signed by adding an RRSIG-record for every unique record name and type combination in the zone. RRSIG-records for the records they sign are returned in responses to DNSSEC enabled queries. - Gateways must be operated by the same administrative entity that provides DNS zone data information and zone data signing for the gateways.

Regarding an implementation example on the gateway side, the administrative domain that runs DNS and has access to required DNSSEC private keys to sign the zone data that contain name information about the gateways, allows using the same private keys to (self)sign certificates that mobile nodes will then use to authenticate gateways in that same domain. This is a certificate (self)signing process in which the "Certificate Authority" is the DNS zone itself. The administrative domain running the gateways can create an arbitrary number of server side certificates any time with short life times. Eventually the lifetime of a created certificate cannot exceed the lifetime of the key used for (self)signing, e.g. the life time of a certificate can be bound to the lifetime of the used ZSK.

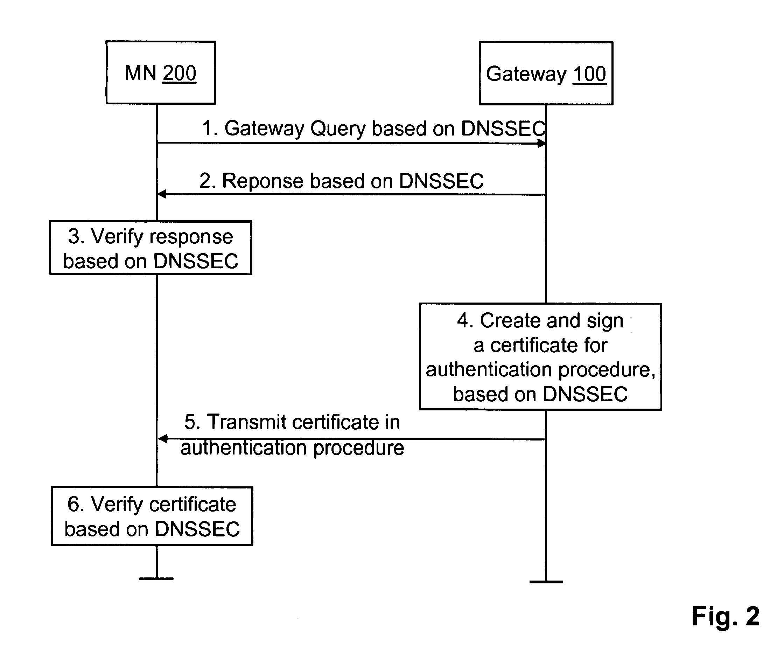

In the following a certificate creation and validation method according to an embodiment of the invention will be described with reference to Fig. 2. The mobile node 200 performs a DNS-based discovery as shown in communication 1. Once the mobile node 200 discovers e.g. the gateway 100 using the DSN-based discovery, it also applies DNSSEC required procedures to verify a DNS response received from the gateway 100 in communication 2. Verification of the DNS response is carried out in a procedure 3.

When the mobile node 200 authenticates towards the gateway 100, it receives a server side certificate in communication 5 that was (self)signed in a procedure 4 using the same DNSSEC keys as for the zone data. That is, in procedure 4 the gateway 100 obtains the server side certificate (self)signed with the same DNSSEC private keys that were used to sign the zone data, and transmits the signed server side certificate to the mobile node 200 in communication 5 for authentication. The gateway 100 may obtain the server side certificate, e.g. from a certificate authority, or may create and sign it by itself as indicated in Fig. 2.

The mobile node 200 can verify the received server side certificate using the same DNSSEC public keys it has for the given zone, where the gateway 100 was queried/resolved from. In communication 6, the mobile node 200 verifies the server side certificate using these DNSSEC public keys. In other words, the mobile node 200 uses the same public keys for verifying the received server side certificate as used for verifying the DNS response.

If the mobile node 200 requires more proof about the gateway 100, it can follow a DNSSEC provided "chain of trust" all way up to a root, where the highest level DNSSEC "Certificate Authority" or "trust anchor" is located. According to DNSSEC, a "chain of trust" is a series of linked DS and DNSKEY records, starting with a "Trust Anchor" to an authoritative name server for the domain in question. Without a complete "chain of trust", an answer to a DNS lookup cannot be securely authenticated.

DNSSEC involves many different keys, which are stored in DNSKEY records and/or are obtained from other sources to form "Trust Anchors". Keys in DNSKEY records can be used for two different things and typically different DNSKEY records are used for each. First, there are Key Signing Keys (KSKs) which are used to sign other DNSKEY records and the DS records. Second, there are Zone Signing Keys (ZSKs) which are used to sign RRSIG and NSEC records. Since the ZSKs are under complete control and use by one particular DNS zone, they can be switched more easily and more often. As a result, ZSKs can be much shorter than KSKs and still offer the same level of protection, but reducing the size of the RRSIG/NSEC records.

According to an embodiment of the invention, authentication is performed using IKEv2 based systems. However, authentication functionality is not restricted thereto. For example, Mobile IP security may be based on Transport Layer Security (TLS) and furthermore based on HTTPS.

In order to improve security, according to an embodiment of the invention the server side certificates are generated with very short life time.

According to an embodiment of the invention, no IPSec public keys are distributed but certificates are generated on the fly like self-signed certificates. By using "delegation signer" system of DNSSEC, the mobile node can find a "trust anchor" from DNSSEC "chain of trust" and know that the certificate is a trusted one for authenticating the gateway. According to an implementation example of the invention, certificates (and DNS zone data) are not signed by using public keys but by private KSK and/or ZSK of DNSSEC.

According to an aspect of the invention, an apparatus of a communications network comprises processing means for obtaining a server side certificate which is signed with a key used for signing zone data for a discovery procedure of discovering the apparatus by a mobile node, and transmitting means for transmitting the signed server side certificate to the mobile node in an authentication procedure of authenticating the apparatus. The signed server side certificate may be a self-signed certificate. The apparatus may comprise the gateway 100 shown in Fig. 1, and the processing means may comprise the processor 10, and the transmitting means may comprise the transceiver 11. The key may comprise at least one of a key signing key and a zone signing key.

According to an aspect of the invention, a mobile apparatus of a communications network system comprises processing means for verifying a server side certificate received in an authentication procedure of authenticating a gateway, using a key used for verifying a given zone in a discovery procedure of discovering the gateway based on signed zone data received for the gateway. The mobile apparatus may comprise the mobile node 200 shown in Fig. 1, and the processing means may comprise the processor 20. The key may be a public key and the signed zone data may be signed by at least one of a key signing key and a zone signing key.

The discovery procedure may be based on domain name system security extensions.

According to an aspect of the invention, a method comprises obtaining a server side certificate which is signed with a key used for signing zone data for a discovery procedure of discovering an apparatus in a communications network by a mobile node, and transmitting the signed server side certificate to the mobile node in an authentication procedure of authenticating the apparatus. The signed server side certificate may be a self-signed certificate. The signed server side certificate may be obtained in procedure 4 shown in Fig. 2, and may be transmitted in communication 5. The key may comprise at least one of a key signing key and a zone signing key.

According to an aspect of the invention, a method comprises verifying a server side certificate received in an authentication procedure of authenticating a gateway, using a key used for verifying a given zone in a discovery procedure of discovering the gateway based on signed zone data received for the gateway. The signed server side certificate may be obtained in communication 5 shown in Fig. 2, and may be verified in procedure 6. The key may be a public key and the signed zone data may be signed by at least one of a key signing key and a zone signing key.

The discovery procedure may be based on domain name system security extensions.

According to an embodiment, the invention may be implemented by a computer program product.

It is to be understood that the above description is illustrative of the invention and is not to be construed as limiting the invention. Various modifications and applications may occur to those skilled in the art without departing from the scope of the appended claims.

## Claims

1. An apparatus (100) of a communications network, the apparatus comprising:
a processor (10) configured to obtain a server side certificate for a given zone, which is signed with the same key by which data under the given zone has been signed in a discovery procedure of discovering the apparatus by a mobile node; and
a transceiver (11) configured to transmit the signed server side certificate to the mobile node in an authentication procedure of authenticating the apparatus.

2. The apparatus of claim 1, wherein the discovery procedure is based on domain name system security extensions.

3. The apparatus of claim 1 or 2, wherein the key comprises at least one of a key signing key and a zone signing key.

4. A mobile apparatus (200) of a communications network system, the mobile apparatus comprising:
a processor (20) configured to verify a server side certificate for a given zone, received in an authentication procedure of authenticating a gateway, using the same key as has been used for verifying data under the given zone in a discovery procedure of discovering the gateway based on signed data under the given zone, received for the gateway.

5. The mobile apparatus of claim 4, wherein the discovery procedure is based on domain name system security extensions.

6. The mobile apparatus of claim 4 or 5, wherein the key is a public key and the signed data are signed by at least one of a key signing key and a zone signing key.

7. An method comprising:
obtaining a server side certificate for a given zone, which is signed with the same key by which data under the given zone has been signed in a discovery procedure of discovering an apparatus in a communications network by a mobile node; and
transmitting the signed server side certificate to the mobile node in an authentication procedure of authenticating the apparatus.

8. The method of claim 7, wherein the discovery procedure is based on domain name system security extensions.

9. The method of claim 7 or 8, wherein the key comprises at least one of a key signing key and a zone signing key.

10. A method comprising:
verifying a server side certificate for a given zone, received in an authentication procedure of authenticating a gateway, using the same key by which data under the given zone has been verified in a discovery procedure of discovering the gateway based on signed data under the given zone, received for the gateway.

11. The method of claim 10, wherein the discovery procedure is based on domain name system security extensions.

12. The method of claim 10 or 11, wherein the key is a public key and the signed data are signed by at least one of a key signing key and a zone signing key.

13. A computer program product including a program for a processing device, comprising software code portions for performing the steps of any one of claims 7 to 12 when the program is run on the processing device.

14. The computer program product according to claim 13, wherein the computer program product comprises a computer-readable medium on which the software code portions are stored.

15. The computer program product according to claim 13, wherein the program is directly loadable into an internal memory of the processing device.

## Patentansprüche

1. Einrichtung (100) eines Kommunikationsnetzes, die Folgendes umfasst:
einen Prozessor (10), eingerichtet zum Beschaffen eines serverseitigen Zertifikats für eine gegebene Zone, das mit dem gleichen Schlüssel signiert ist, mit dem die Daten unter der gegebenen Zone in einer Erkennungsprozedur des Erkennens der Einrichtung durch einen Mobilfunkknoten signiert worden ist; und
einen Sender/Empfänger (11), eingerichtet zum Übertragen des signierten serverseitigen Zertifikats zu dem Mobilfunkknoten in einer Authentifizierungsprozedur zum Authentifizieren der Einrichtung.

2. Einrichtung nach Anspruch 1, wobei die Erkennungsprozedur auf Domänennamen-Systemsicherheitszusätzen basiert.

3. Einrichtung nach Anspruch 1 oder 2, wobei der Schlüssel mindestens einen Schlüsselsignierschlüssel und/oder einen Zonensignierschlüssel umfasst.

4. Mobileinrichtung (200) eines Kommunikationsnetzsystems, die Folgendes umfasst:
einen Prozessor (20), eingerichtet zum Überprüfen eines serverseitigen Zertifikats für eine gegebene Zone, empfangen in einer Authentifizierungsprozedur des Authentifizierens eines Gateways unter Verwendung des gleichen Schlüssels, der zum Überprüfen von Daten unter der gegebenen Zone in einer Erkennungsprozedur des Erkennens des Gateways basierend auf signierten Daten unter der gegebenen Zone, empfangen für das Gateway, verwendet worden ist.

5. Mobilfunkeinrichtung nach Anspruch 4, wobei die Erkennungsprozedur auf Domänennamen-Systemsicherheitszusätzen basiert.

6. Mobilfunkeinrichtung nach Anspruch 4 oder 5, wobei der Schlüssel ein öffentlicher Schlüssel ist und die signierten Daten durch einen Schlüsselsignierschlüssel und/oder einen Zonensignierschlüssel signiert werden.

7. Verfahren, umfassend:
Beschaffen eines serverseitigen Zertifikats für eine gegebene Zone, das mit dem gleichen Schlüssel signiert ist, mit dem Daten unter der gegebenen Zone in einer Erkennungsprozedur des Erkennens einer Einrichtung in einem Kommunikationsnetz durch einen Mobilfunknoten signiert worden sind; und
Übertragen des signierten serverseitigen Zertifikats zu dem Mobilfunkknoten in einer Authentifizierungsprozedur des Authentifizierens der Einrichtung.

8. Verfahren nach Anspruch 7, wobei die Erkennungsprozedur auf Domänennamensystem-Sicherheitszusätzen basiert.

9. Verfahren nach Anspruch 7 oder 8, wobei der Schlüssel einen Schlüsselsignierschlüssel und/oder einen Zonensignierschlüssel umfasst.

10. Verfahren, umfassend:
Überprüfen eines serverseitigen Zertifikats für eine gegebene Zone, empfangen in einer Authentifizierungsprozedur des Authentifizierens eines Gateways unter Verwendung des gleichen Schlüssels, mit dem Daten unter der gegebenen Zone in einer Erkennungsprozedur des Erkennens des Gateways basierend auf signierten Daten unter der gegebenen Zone, empfangen für das Gateway, überprüft worden sind.

11. Verfahren nach Anspruch 10, wobei die Erkennungsprozedur auf Domänennamensystemsicherheitszusätzen basiert.

12. Verfahren nach Anspruch 10 oder 11, wobei der Schlüssel ein öffentlicher Schlüssel ist und die signierten Daten durch einen Schlüsselsignierschlüssel und/oder einen Zonensignierschlüssel signiert worden sind.

13. Computerprogrammprodukt mit einem Programm für eine Verarbeitungsvorrichtung, umfassend Softwarecodeteile zum Durchführen der Schritte eines beliebigen der Ansprüche 7 bis 12, wenn das Programm auf der Verarbeitungsvorrichtung abläuft.

14. Computerprogrammprodukt nach Anspruch 13, wobei das Computerprogrammprodukt ein computerlesbares Medium umfasst, auf dem die Softwarecodeteile gespeichert sind.

15. Computerprogrammprodukt nach Anspruch 13, wobei das Programm direkt in einen internen Speicher der Verarbeitungsvorrichtung geladen werden kann.

## Revendications

1. Un appareil (100) d'un réseau de communication, l'appareil comprenant :
un processeur (10) configuré de façon à obtenir un certificat côté serveur pour une zone donnée, qui est signé avec la même clé au moyen de laquelle des données sous la zone donnée ont été signées dans une procédure de découverte destinée à la découverte de l'appareil par un noeud mobile, et
un émetteur-récepteur (11) configuré de façon à transmettre le certificat côté serveur signé au noeud mobile dans une procédure d'authentification destinée à l'authentification de l'appareil.

2. L'appareil selon la revendication 1, dans lequel la procédure de découverte se base sur des extensions de sécurité de système de noms de domaine.

3. L'appareil selon la revendication 1 ou 2, dans lequel la clé comprend au moins une clé parmi une clé de signature de clé et une clé de signature de zone.

4. Un appareil mobile (200) d'un système de réseau de communication, l'appareil mobile comprenant :
un processeur (20) configuré de façon à vérifier un certificat côté serveur pour une zone donnée reçu dans une procédure d'authentification destinée à l'authentification d'une passerelle, au moyen de la même clé que celle qui a été utilisée pour vérifier des données sous la zone donnée dans une procédure de découverte destinée à la découverte de la passerelle en fonction de données signées sous la zone donnée reçues pour la passerelle.

5. L'appareil mobile selon la revendication 4, dans lequel la procédure de découverte se base sur des extensions de sécurité de système de noms de domaine.

6. L'appareil mobile selon la revendication 4 ou 5, dans lequel la clé est une clé publique et les données signées sont signées par au moins une clé parmi une clé de signature de clé et une clé de signature de zone.

7. Un procédé comprenant :
l'obtention d'un certificat côté serveur pour une zone donnée, qui est signé avec la même clé au moyen de laquelle des données sous la zone donnée ont été signées dans une procédure de découverte destinée à la découverte d'un appareil dans réseau de communication par un noeud mobile, et
la transmission du certificat côté serveur signé au noeud mobile dans une procédure d'authentification destinée à l'authentification de l'appareil.

8. Le procédé selon la revendication 7, dans lequel la procédure de découverte se base sur des extensions de sécurité de système de noms de domaine.

9. Le procédé selon la revendication 7 ou 8, dans lequel la clé comprend au moins une clé parmi une clé de signature de clé et une clé de signature de zone.

10. Un procédé comprenant :
la vérification d'un certificat côté serveur pour une zone donnée, reçu dans une procédure d'authentification destinée à l'authentification d'une passerelle, au moyen de la même clé au moyen de laquelle des données sous la zone donnée ont été vérifiées dans une procédure de découverte destinée à la découverte de la passerelle en fonction de données signées sous la zone donnée reçues pour la passerelle.

11. Le procédé selon la revendication 10, dans lequel la procédure de découverte se base sur des extensions de sécurité de système de noms de domaine.

12. Le procédé selon la revendication 10 ou 11, dans lequel la clé est une clé publique et les données signées sont signées par au moins une clé parmi une clé de signature de clé et une clé de signature de zone.

13. Un produit de programme informatique contenant un programme destiné à un dispositif de traitement, comprenant des parties de code logiciel destinées à l'exécution des étapes selon l'une quelconque des revendications 7 à 12 lorsque le programme est exécuté sur le dispositif de traitement.

14. Le produit de programme informatique selon la revendication 13, dans lequel le produit de programme informatique comprend un support lisible par ordinateur sur lequel les parties de code logiciel sont conservées en mémoire.

15. Le produit de programme informatique selon la revendication 13, dans lequel le programme peut être chargé directement dans une mémoire interne du dispositif de traitement.
